# EUROPEAN PATENT SPECIFICATION

(11) **EP 1 350 686 B1**
(45) Date of publication and mention of the grant of the patent: **14.06.2006**
(21) Application number: 03004936.5
(22) Date of filing: 10.03.2003
(51) Int. Cl.: B60R 21/16

(54) **Module with airbag and external tether**
Modul mit Luftsack und externes Rückhalteband
Module avec un sac gonflable et une sangle de retenue

(30) Priority: 06.04.2002 US 370773 P
(43) Date of publication of application: 08.10.2003
(73) Proprietor: KEY SAFETY SYSTEMS, INC., Sterling Heights, Michigan 48314 (US)
(72) Inventor: Cooper, John, Oxford, Michigan 48371 (US); Burdock, John M., St. Clair Shores, Michigan 48081 (US); Jung, Jin Ho, Rochester Hills, Michigan 48307 (US); Arwood, Robert L. III, Fraser, Michigan 48026 (US); Sadenwater, Robert J., Clarkston, Michigan 48340 (US); Green, Walter R., Pontiac, Michigan 48340 (US); Mutaz, A. Shkoukani, Fraser, Michigan 48026 (US); Blancou, Jean-Luc, Troy, Michigan 48084 (US)
(74) Representative: Gislon, Gabriele

(56) References cited:
- GB-A- 2 357 999
- US-A1- 2001 035 639
- US-B1- 6 334 627

## Description

The present invention generally relates to an airbag or airbag module having an external tether. The function of a tether, whether internal or external, is to slow the motion of the deploying airbag and guide its motion relative to the occupant to be protected.

US 2001/0035639 discloses an airbag module wherein a front surface portion of the airbag is coupled with a rear surface portion of the same, in correspondence of the neck, by way of straps which operate as means for restrict the deployed shape of the airbag. Each strap is provided with a tearable portion which tears when the internal pressure of the airbag reaches a preset threshold.

Accordingly the invention comprises an airbag module as set forth in the attached Claim 1.

### BRIEF DESCRIPTION OF THE DRAWINGS

FIGUREs 1a and 1b show a first embodiment of the invention.
FIGUREs 2a and 2b show a second embodiment of the invention.
FIGURE 3 illustrates the interconnection of an airbag to an external tether.
FIGURE 3a is a cross-sectional view showing a more detailed relationship of an airbag and inflator.
FIGURE 4 shows an alternative tether.
FIGURE 5 shows the alternative tether enveloping an airbag inflator.
FIGURE 6 shows many of the major portions of the present invention.
FIGUREs 7a-7d illustrate the method of assembly of the present invention.
FIGURE 8 is a plan view showing an airbag partially inflated.
FIGURE 9 illustrates an alternate embodiment of the invention.

### DETAILED DESCRIPTION OF THE INVENTION

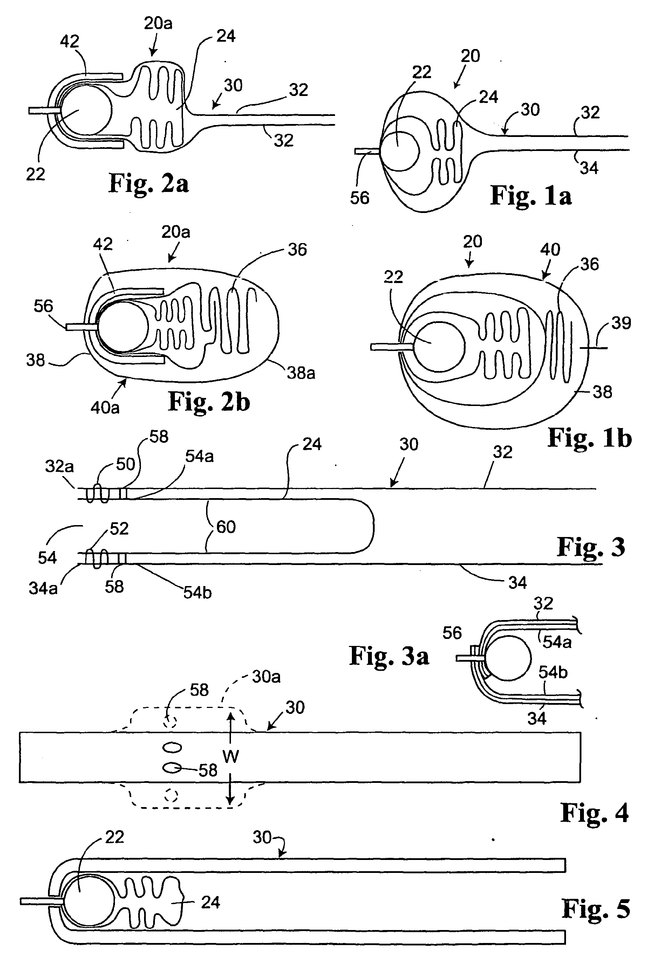

FIGUREs 1a and 1b illustrate an airbag module 20 incorporating the present invention. The module 20 includes an airbag inflator 22, and an airbag 24 that prior to inflation is presented in a compact or folded condition about the inflator. Extending about the inflator and folded airbag 24 is an external tether generally shown by numeral 30 having a first or upper tether portion 32 and a second or lower tether portion 34.

In the illustrated embodiment, the first or upper and second or lower tether portions 32, 34 respectively extend over the top and bottom (upper side and lower side) of the folded airbag 24. If the inflator is mounted vertically (not shown) the tether portions would extend from either the left or right-hand sides of the airbag. The tether portions 32, 34 are substantially the same size (but this is not a requirement as the lengths may vary somewhat) and are aligned and registered one to the other, that is to the extent possible the tether portions are placed on top of each other. Thereafter, the aligned and registered tether portions (also called tether flaps) 32, 34 are rolled or folded in a plurality of accordion pleats (see numeral 36 of FIGURE 1 b). The pleated or rolled tethers 32, 34 (together referred to by numeral 36) are positioned atop the folded airbag 24, that is, positioned upon the inflator in the direction in which the airbag will generally inflate. To maintain the airbag and tether in a folded state a tearable cover or panel made of a frangible material 38 is shown enveloping the airbag 24.

In the embodiment illustrated in FIGUREs 1a and 1b, the inflator 22, the folded airbag 24 and folded, pleated or rolled tethers 36 and the sack or material 38 are referred to as a bag pack 40. The covering material or sack 38 may include a line of tearable perforations 39 as used in the art.

FIGUREs 2a and 2b show an alternate embodiment of the invention. In this alternate embodiment of the invention the bag pack 40a only consists of the inflator and the folded airbag 24 and tether 30, which form part of airbag module 20a. This bag pack 40a is shown inserted within a housing 42. Thereafter the sack or tearable material 38a is placed about and envelops the housing and bag pack 40a. Or course the bag pack 40 of FIGURE 1a can simply be inserted within a housing 42, in which case the externally positioned tearable material 38a need not be used.

FIGURE 3 shows the airbag 24 and tether 30. In this embodiment the tether flaps or portions 32, 34 are separate and distinct pieces of material, each of which is respectively sewn (see seams 50, 52) or otherwise secured (stapled, welded, glued) to opposing portions 54a, 54b, of the neck 54 of the airbag 24. These neck portions 54a, 54b and tether portions 32, 34 may include one or more mounting openings 58 (which correspond to at least some of the number of studs 56 extending from the inflator 22). As known in the art, the studs can extend from a manifold or housing. Ends 32a, 43a of each tether portion 32, 34 and the neck portions 54a, 54b are overlapped about the mounting fasteners or studs 56 to achieve the overlapped configuration as illustrated in FIGURE 3a. It can be appreciated it is not necessary to connect the tethers or tether portions 32, 34 to the neck 54 of the airbag; the tethers can be attached at other locations on the airbag. For example, the tethers (tether portions 32, 34) can be sewn to respectively opposing portions of the airbag, at locations designated by numbers 60, which are remote from the neck 54.

FIGURE 4 shows an alternative embodiment of the tether. The tether 30 can be manufactured utilizing a single length of material having a plurality of mounting openings 58 therein. The number of mounting openings corresponds to the number (or at least some) fastening bolts 56. For example, if the inflator is wider than the width of the tether 30, the tether 30 can be made with a localized extension having an increased width (w) portion 30a, shown in phantom line, which can accommodate a larger number of mounting studs.

FIGURE 5 illustrates a one-piece tether 30 mounted about the inflator 22 and folded airbag 24.

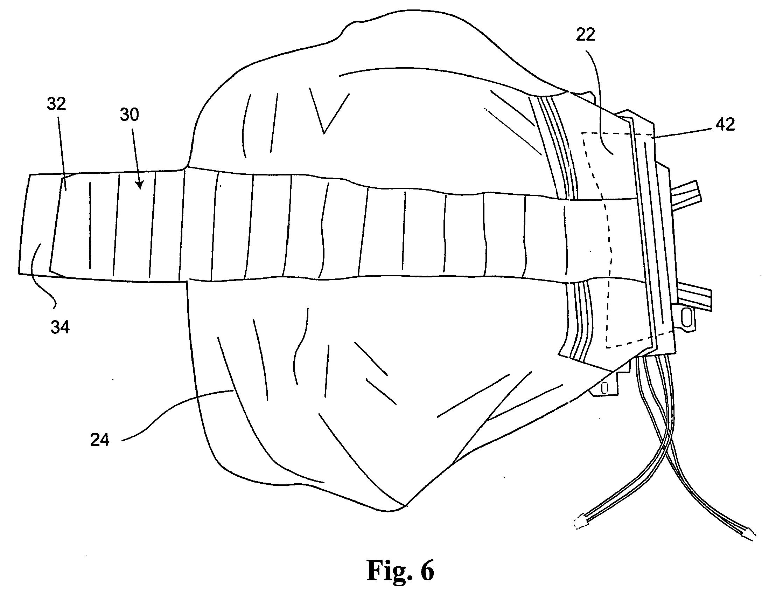

FIGURE 6 shows an airbag 22 extending from a housing 42. The airbag 22 is, for the purposes of illustration, laid flat on a work surface with the tether 30 and in particular the top tether portion 32 extending on the upper side of the airbag. The lower portion 34 of the tether 30 is positioned below, and extends somewhat beyond the end of the upper tether 32.

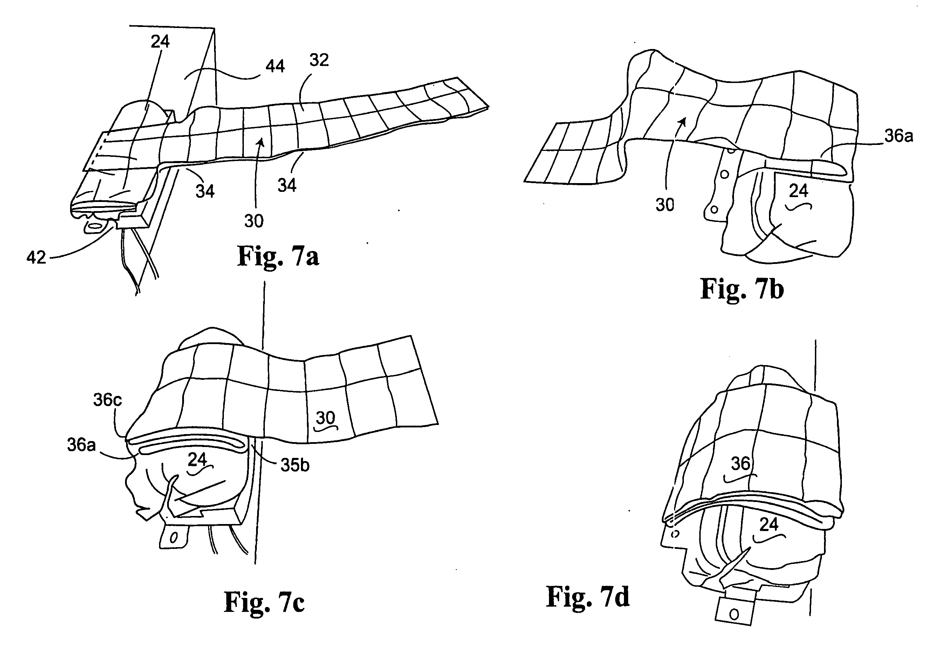

FIGURE 7a shows a folded airbag 24, positioned within a housing 42 and located on a work surface 44. The folded airbag 22 takes the form of a cylinder and is placed within and may partially extend from the housing 42. In FIGURE 7a, the upper 32 and lower 34 tether portions are shown pulled or extended outwardly from the folded airbag at their full length. In FIGURE 7b, that portion of the tether 30 near the airbag and housing is folded into first accordion pleat 36a. Thereafter the remaining portions of the tether 30 are folded into more pleats such as 36b, 36c (as shown in FIGURE 7c). FIGURE 7d shows the pleated tether portions 36 positioned on top of the folded airbag, in a manner similar to the embodiments shown in FIGUREs 1a and 1b.

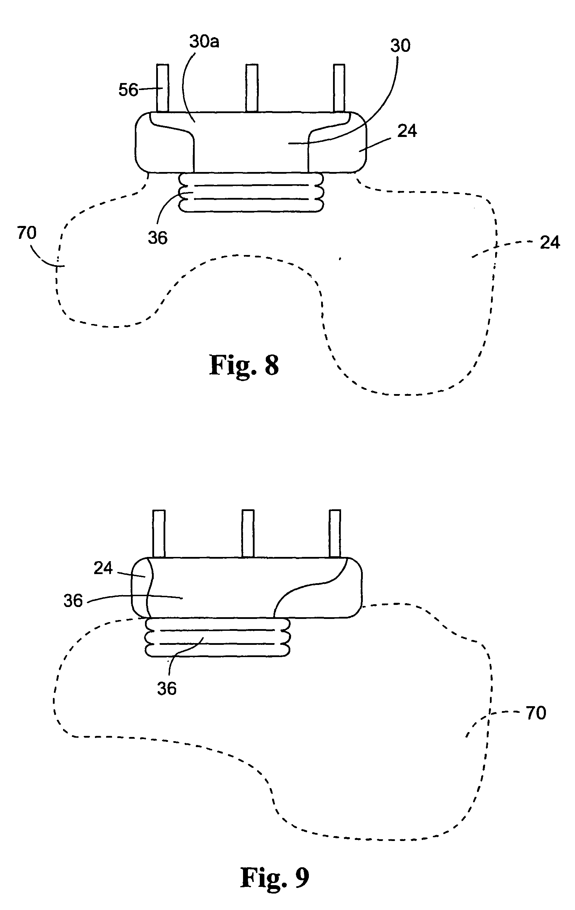

The folded or rolled tether 30 (or tether portions 32, 34) is shown in FIGURE 8 generally positioned in and about the center of the folded airbag. While not shown, the sack or breakable material 38 would envelop the airbag and the tether and fold same to the inflator in a compact configuration. Upon receipt of inflation gas the airbag will tend to inflate, however, the rolled or accordion folded tether 30 will provide a measure of resistance to the inflating bag (during the initial moments of inflation), that is, in the vicinity of the folded (pleated) portion 36 of the tether 30, thereby slowing the inflation of that related portion of the airbag. The phantom lines 70 in FIGURE 8 represent the folded tether portions 36 centrally positioned, the airbag will tend to initially inflate outwardly on either side of the still folded or partially folded tether 30. As the airbag continues to inflate, the central portion of the airbag will tend to also push the tether portions 32, 34 apart and, as long as the tether portions remain relatively folded or pleated, they will tend to stay together and thereby retard or delay the inflation of the center portion of the airbag until the tethers are pushed apart.

FIGURE 9 shows the folded or tether portions 36 positioned off-center (biased to one side) relative to the folded airbag 24 in comparison with the earlier embodiments, which described a folded tether positioned centrally of the folded airbag 22. In this embodiment the inflation of the left-hand portion of the airbag (in relation to that shown in FIGURE 9) will be delayed somewhat in its inflation relative to the right-hand portion of the airbag, as also illustrated by phantom line 70. Subsequently, as the airbag inflates, the tether or tether portions (using one-piece or multiple piece tethers) will generally be positioned oppositely relative to the fully inflated airbag. One of the benefits of the present invention is the tether portions are not sewn or physically joined together at their extreme ends. The folded tether 36 can be positioned on the side opposite that illustrated in FIGURE 9.

## Claims

1. An airbag module (20) comprising: an inflator (22) and folded airbag (24), the airbag capable of inflating upon receipt of inflation gas and a tether (30) having first portion (32) fixedly attached in relation to one of the airbag and the inflator, the tether includes a second portion (34), which is loosely positioned relative to the first portion, **characterized in that** the tether (30) is selected from:
either a single length of material (30) configured in a U-shape having a center and two extending legs (3,2, 34), wherein the center of the single length of material (30) is fixedly located relative to the inflator (22) and wherein a first portion of each leg (32, 34) extends oppositely about the folded airbag (24) and a second portion of each leg (32, 34) is configured in overlapping relation;
or two lengths of material (32, 34) wherein a first portion of each length (32, 34) is secured to opposing portions of the airbag (24) and a second portion of each length (32, 34) is configured in overlapping relation.

2. An airbag module (20) as defined in Claim 1 wherein the second portion (34) of the tether (30) is configured into a compact physical orientation and positioned upon the folded airbag (24).

3. An airbag module (20) as defined in Claim 1 or 2 wherein each second portion (34) is folded into overlapping pleats (36) and located upon the folded airbag (24).

4. An airbag module (20) defined in Claims 1-3 wherein a first portion of one of said legs (32, 34) envelops a determinable area of the folded airbag (24) while the first portion of the other leg (32, 34) envelops a greater area of the folded airbag (24).

5. An airbag module (20) as defined in Claim 1 wherein the tether (30) comprises two separate length of material (32, 34) and the first portion of each length of material (32, 34) is secured proximate a neck portion (54) of the airbag (24).

6. An airbag module (20) as defined in Claim 1 wherein the tether (30) comprises a single length of material (30) and width of the tether (30) is widest proximate its center.

7. An airbag module (20) as defined in Claim 6 wherein the single length of material (30) includes a plurality of openings (58) for receiving fasteners proximate its center.

## Patentansprüche

1. Airbagmodul (20), das folgendes umfasst: eine Aufblasvorrichtung (22) und einen gefalteten Airbag (24), wobei sich der Airbag auf das Aufnehmen eines Aufblasgases hin aufblasen kann, und ein Rückhalteband (30), das einen ersten Abschnitt (32) hat, der feststehend im Verhältnis entweder zu dem Airbag oder zu der Aufblasvorrichtung befestigt ist, wobei das Rückhalteband einen zweiten Abschnitt (34) einschließt, der lose im Verhältnis zu dem ersten Abschnitt angeordnet ist, **dadurch gekennzeichnet, daß** das Rückhalteband (30) aus folgenden ausgewählt wird:
entweder eine einzelne Materiallänge (30), konfiguriert in einer U-Form, die eine Mitte und zwei abstehende Schenkel (32, 34) hat, wobei die Mitte der einzelnen Materiallänge (30) feststehend im Verhältnis zu der Aufblasvorrichtung (22) angeordnet ist und wobei sich ein erster Abschnitt jedes Schenkels (32, 34) entgegengesetzt um den gefalteten Airbag (24) erstreckt und ein zweiter Abschnitt jedes Schenkels (32, 34) in einem Überlappungsverhältnis konfiguriert ist,
oder zwei Materiallängen (32, 34), wobei ein erster Abschnitt jeder Länge (32, 34) an gegenüberliegenden Abschnitten des Airbags (24) befestigt ist und ein zweiter Abschnitt jeder Länge (32, 34) in einem Überlappungsverhältnis konfiguriert ist.

2. Airbagmodul (20) nach Anspruch 1, wobei der zweite Abschnitt (34) des Rückhaltebandes (30) in eine kompakte physische Ausrichtung konfiguriert und auf dem gefalteten Airbag (24) angeordnet ist.

3. Airbagmodul (20) nach Anspruch 1 oder 2, wobei jeder zweite Abschnitt (34) in überlappende Falten (36) gefaltet und auf dem gefalteten Airbag (24) angeordnet ist.

4. Airbagmodul (20) nach Anspruch 1 bis 3, wobei ein erster Abschnitt eines der Schenkel (32, 34) eine bestimmbare Fläche des gefalteten Airbags (24) umhüllt, während der erste Abschnitt des anderen Schenkels (32, 34) eine größere Fläche des gefalteten Airbags (24) umhüllt.

5. Airbagmodul (20) nach Anspruch 1, wobei das Rückhalteband (30) zwei gesonderte Materiallängen (32, 34) umfasst und der erste Abschnitt jeder Materiallänge (32, 3,4) nahe einem Halsabschnitt (54) des Airbags (24) befestigt ist.

6. Airbagmodul (20) nach Anspruch 1, wobei das Rückhalteband (30) eine einzelne Materiallänge (30) umfasst und die Breite des Rückhaltebandes (30) nahe dessen Mitte am breitesten ist.

7. Airbagmodul (20) nach Anspruch 6, wobei die einzelne Materiallänge (30) nahe deren Mitte mehrere Öffnungen (58) zum Aufnehmen von Befestigungselementen einschließt.

## Revendications

1. Module de coussin d'air (20), comprenant un dispositif de gonflement (22) et un coussin d'air plié (24), le coussin d'air pouvant être gonflé lors de la réception de gaz de gonflement, et une sangle d'attache (30) comportant une première partie (32) fermement fixée sur le coussin d'air ou le dispositif de gonflement, la sangle d'attache englobant une deuxième partie (34), positionnée sans fixation sur la première partie, **caractérisé en ce que** la sangle d'attache (30) est sélectionnée parmi:
une seule longueur de matériau (30), ayant une forme en U comportant un centre et deux branches à extension (32, 34), le centre de la seule longueur de matériau (30) étant agencée de manière fixe par rapport au dispositif de gonflement (22), une première partie de chaque branche (32, 34) s'étendant dans une direction opposée autour du coussin d'air plié (24) et une deuxième partie de chaque branche (32, 34) étant configurée dans une relation à chevauchement;
ou deux longueurs de matériau (32, 34), la première partie de chaque longueur (32, 34) étant fixée sur les parties opposées du coussin d'air (24) et une deuxième partie de chaque longueur (32, 34) étant configurée dans une relation à chevauchement.

2. Module de coussin d'air (20) selon la revendication 1, dans lequel la deuxième partie (34) de la sangle d'attache (30) est configurée dans une orientation physique compacte et positionnée sur le coussin d'air plié (24).

3. Module de coussin d'air (20) selon les revendications 1 ou 2, dans lequel chaque deuxième partie (34) est pliée en des plis à chevauchement (36) et agencée sur le coussin d'air plié (24).

4. Module de coussin d'air (20) selon les revendications 1 à 3, dans lequel une première partie de l'une desdites branches (32, 34) enveloppe une surface déterminée du coussin d'air plié (24), la première partie de l'autre branche (32, 34) enveloppant une surface accrue du coussin d'air plié (24).

5. Module de coussin d'air (20) selon la revendication 1, dans lequel la sangle d'attache (30) comprend deux longueurs séparées de matériau (32, 34), la première partie de chaque longueur de matériau (32, 34) étant proche d'une partie de col (54) du coussin d'air (24).

6. Module de coussin d'air (20) selon la revendication 1, dans lequel la sangle d'attache (30) comprend une seule longueur de matériau (30), la largeur de la sangle d'attache (30) étant maximale près de son centre.

7. Module de coussin d'air (20) selon la revendication 6, dans lequel la seule longueur de matériau (30) englobe plusieurs ouvertures (58) pour recevoir des éléments de fixation près de son centre.
